# EUROPEAN PATENT APPLICATION

(11) **EP 4 641 477 A1**
(43) Date of publication of application: **29.10.2025**
(21) Application number: 23906309.2
(22) Date of filing: 23.05.2023
(51) Int. Cl.: G06Q 50/10, G16Y 10/40, G16Y 20/10, G16Y 20/20, G16Y 40/20, G06Q 10/20

(54) **TIRE REPLACEMENT MANAGEMENT SYSTEM, TIRE REPLACEMENT MANAGEMENT METHOD, AND PROGRAM**

(30) Priority: 19.12.2022 JP 2022202068
(71) Applicant: SUMITOMO RUBBER INDUSTRIES, LTD., Kobe-shi, Hyogo 651-0072 (JP)
(72) Inventor: HOSOYA, Ryota, Kobe-shi, Hyogo 651-0072 (JP)
(74) Representative: Forresters IP LLP
(86) International application number: PCT/JP2023/019203
(87) International publication number: WO 2024/134923

(57) **Abstract**

A tire replacement management system (100) includes: an estimation processing unit (112) configured to estimate a busy timing of tire replacement work performed by a service provider that provides a tire replacement service for a vehicle, on the basis of meteorological prediction information; a recommended timing determination unit (114) configured to determine a recommended timing in which a first tire mounted to the vehicle to be subjected to the tire replacement service is replaced with a second tire different from the first tire, to be a timing separated, by a set period specified in advance, from the busy timing; and an output processing unit (115) configured to output the recommended timing determined by the recommended timing determination unit, to a terminal device used by a manager of the vehicle.

## Description

### TECHNICAL FIELD

The present disclosure relates to a tire replacement management system, a tire replacement management method, and a program.

### BACKGROUND ART

Tires mounted to a vehicle such as a passenger car, a truck, or a bus include, for example: so-called normal tires (also referred to as summer tires) that effectively exhibit tire performance with respect to dry road surfaces; so-called snow tires (also referred to as winter tires) that effectively exhibit tire performance with respect to ice and snow roads, etc.; and the like. Around the time when the season changes from summer to winter, the owner (manager) of a vehicle takes the vehicle to a shop (service provider) that provides tire replacement services, and has the tires of the vehicle replaced from the normal tires to the snow tires.

Conventionally, in order to avoid concentration of demand for tire replacement on a specific timing, a technology that makes the service charge required for the tire replacement service changeable, on the basis of various tire use periods, the difference between the fuel consumption of the vehicle when the normal tires are mounted and the fuel consumption of the vehicle when the snow tires are mounted, and the like, has been proposed (see Patent Literature 1).

### CITATION LIST

### [PATENT LITERATURE]

[PTL 1] Japanese Laid-Open Patent Publication No. 2019-040369

### SUMMARY OF THE INVENTION

### PROBLEMS TO BE SOLVED BY THE INVENTION

Meanwhile, the busy timing of the tire replacement service in the shop is not necessarily a fixed timing, and for example, the busy timing may be influenced by the content of a weather forecast in the region where the shop is located. For example, when it is assumed that the busy timing in a usual year when the normal tires are replaced with the snow tires is a specific timing (e.g., early December), if a first snow forecast (a forecast that snow will fall for the first time after summer) is announced by the Japan Meteorological Agency or the like as a weather forecast regarding a timing two weeks before the specific timing, the owner will have to replace tires in a hurry earlier than scheduled. In this case, for example, the timing immediately before the predicted day according to the first snow forecast becomes the busy timing on which the demand for tire replacement is concentrated, and in the end, the tire replacement demand in the busy timing cannot be dispersed.

An object of the present disclosure is to provide a tire replacement management system, a tire replacement management method, and a program that can disperse the replacement demand in the busy timing of tire replacement work.

### SOLUTION TO THE PROBLEMS

A tire replacement management system according to an aspect of the present disclosure includes: an estimation processing unit configured to estimate a busy timing of tire replacement work performed by a service provider that provides a tire replacement service for a vehicle, on the basis of meteorological prediction information; a recommended timing determination unit configured to determine a recommended timing in which a first tire mounted to the vehicle to be subjected to the tire replacement service is replaced with a second tire different from the first tire, to be a timing separated, by a set period specified in advance, from the busy timing; and an output processing unit configured to output the recommended timing determined by the recommended timing determination unit, to a terminal device used by a manager of the vehicle.

Since the tire replacement management system is configured as above, a precise busy timing having a high estimation accuracy is estimated, the recommended timing is determined on the basis of the thus-estimated busy timing, and the recommended timing is outputted to a terminal device. Therefore, the manager can grasp the recommended timing that is highly reliable. Since the recommended timing is outputted to the terminal device, it is possible to urge the manager to perform tire replacement in the recommended timing.

### ADVANTAGEOUS EFFECTS OF THE INVENTION

According to the present disclosure, replacement demand in the busy timing of tire replacement work can be dispersed.

### BRIEF DESCRIPTION OF THE DRAWINGS

[FIG. 1] FIG. 1 is a block diagram showing a configuration of a tire replacement management system according to a first embodiment of the present disclosure.
[FIG. 2] FIG. 2 is a block diagram showing a configuration of a management server included in a tire management system according to the first embodiment of the present disclosure.
[FIG. 3] FIG. 3 shows transportation business customer data showing an example of customer data when a vehicle manager is a transportation provider.
[FIG. 4] FIG. 4 shows individual customer data showing an example of customer data when the vehicle manager is an individual.
[FIG. 5] FIG. 5 is a flowchart showing a first processing example of a replacement recommendation timing determination process executed by a control unit of the management server in the first embodiment of the present disclosure.
[FIG. 6] FIG. 6 is a flowchart showing a second processing example of the replacement recommendation timing determination process executed by the control unit of the management server in the first embodiment of the present disclosure.
[FIG. 7] FIG. 7 is a flowchart showing a third processing example of the replacement recommendation timing determination process executed by the control unit of the management server in the first embodiment of the present disclosure.
[FIG. 8] FIG. 8 is a flowchart showing a fourth processing example of the replacement recommendation timing determination process executed by the control unit of the management server in the first embodiment of the present disclosure.
[FIG. 9] FIG. 9 is a block diagram showing a configuration of a management server included in a tire management system according to a second embodiment of the present disclosure.
[FIG. 10] FIG. 10 is a flowchart showing a fifth processing example of the replacement recommendation timing determination process executed by a control unit of the management server in the second embodiment of the present disclosure.
[FIG. 11] FIG. 11 is a block diagram showing a configuration of a management server included in a tire management system according to a third embodiment of the present disclosure.
[FIG. 12] FIG. 12 is a flowchart showing a sixth processing example of the replacement recommendation timing determination process executed by a control unit of the management server in the third embodiment of the present disclosure.

### DESCRIPTION OF EMBODIMENTS

Hereinafter, embodiments of the present disclosure will be described with reference to accompanying drawings. The following embodiments are examples in which the present disclosure is embodied, and do not limit the technical scope of the present disclosure. In each embodiment, components that are common with another embodiment are denoted by the same reference characters as the reference characters used for the components in the other embodiment, and detailed description thereof is omitted.

### [First embodiment]

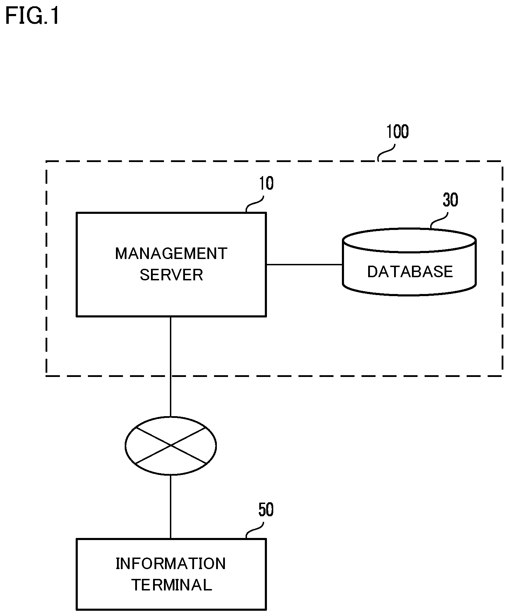

FIG. 1 is a block diagram showing a configuration of a tire replacement management system 100 (hereinafter, simply referred to as management system 100) according to a first embodiment of the present disclosure. The management system 100 is an example of the tire replacement management system of the present disclosure and is composed of a management server 10 and a database 30. In the management system 100, the management server 10 and the database 30 are communicably connected to each other through a wired or wireless communication network. The communication network is, for example, a wired communication network connected with LAN or the like, or a wireless communication network such as a dedicated line or a public line.

The management server 10 is an element forming the management system 100. The management server 10 is installed, for example, in a tire service shop (an example of a service provider of the present disclosure) that provides a tire replacement service of replacing tires of a vehicle. The tire service shop is, for example, a tire dealer that performs sales, replacement, etc. of tires, a vehicle dealer that performs sales, maintenance, etc. of the vehicle, an automobile maintenance shop that performs statutory inspection, repair, etc. of the vehicle, or the like.

In the present embodiment, the management system 100 determines a replacement recommendation timing for the time when so-called normal tires (summer tires) mounted to a predetermined vehicle are replaced with so-called snow tires (winter tires), and outputs replacement recommendation information including the replacement recommendation timing to an information terminal 50 (an example of a terminal device of the present disclosure) used by a manager (hereinafter, referred to as vehicle manager) of the vehicle. Here, the normal tire is an example of a first tire of the present disclosure. The snow tire is an example of a second tire of the present disclosure. The vehicle manager is an example of a manager of the present disclosure.

The replacement recommendation timing is the optimum timing as a replacement timing for normal tires of a vehicle of the vehicle manager and is a timing proposed by the tire service shop to the vehicle manager being a customer thereof. In the present embodiment, a timing that is before, by a later-described set period T0, a later-described specific predicted day (first snow forecasted day, first frost predicted day) for which a phenomenon of first snow or first frost is predicted to occur, is recommended as an appropriate replacement timing to the vehicle manager.

If the normal tires are replaced with the snow tires in the replacement recommendation timing recommended by the tire service shop, the vehicle manager need not worry about the vehicle falling into a poor traveling state due to snowfall, road surface freezing, road surface icing, or the like. In addition, for the vehicle manager, if the normal tires are replaced with the snow tires in a timing outside the busy timing of the tire replacement work, the waiting time required for tire replacement is decreased. Therefore, decrease in operating hours of business vehicles or the like can be prevented. In addition, for the driver as well, the waiting time required for the tire replacement can be decreased. In addition, even if the driver encounters snowfall, road surface freezing, road surface icing, or the like having occurred earlier than the forecast, the driver can drive, with peace of mind, the vehicle of which the tires have been replaced with the snow tires early. In the tire service shop, since the replacement demand in the busy timing for the tire replacement work is dispersed, burden of workers in the busy timing can be reduced.

The vehicle is a vehicle owned by the vehicle manager registered as a customer of the tire service shop, for example. The replacement recommendation timing is grasped by the vehicle manager through the information terminal 50. Accordingly, the vehicle manager can appropriately judge the replacement timing for tires on the basis of the replacement recommendation timing.

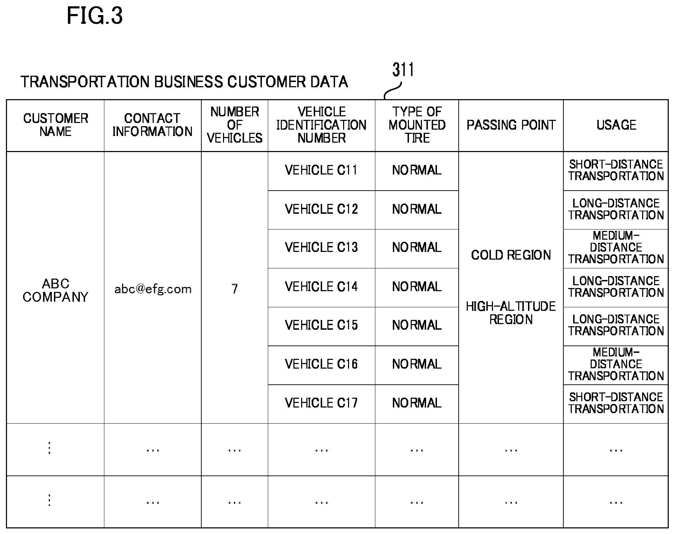

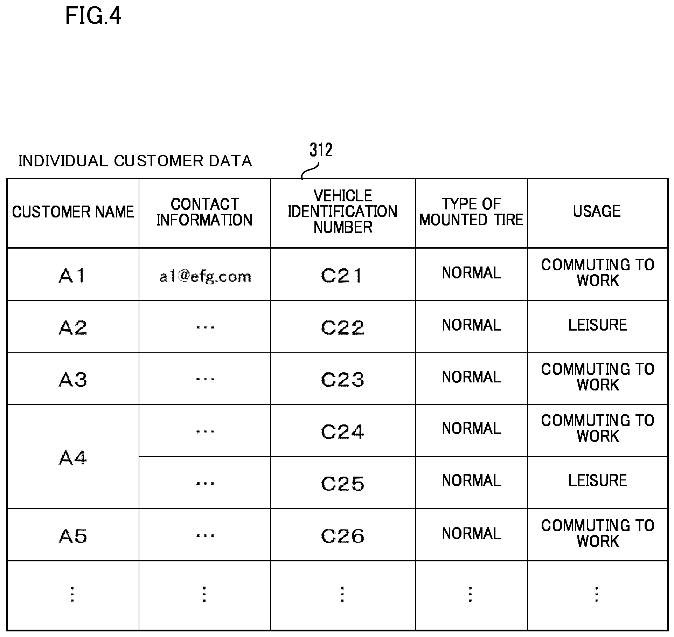

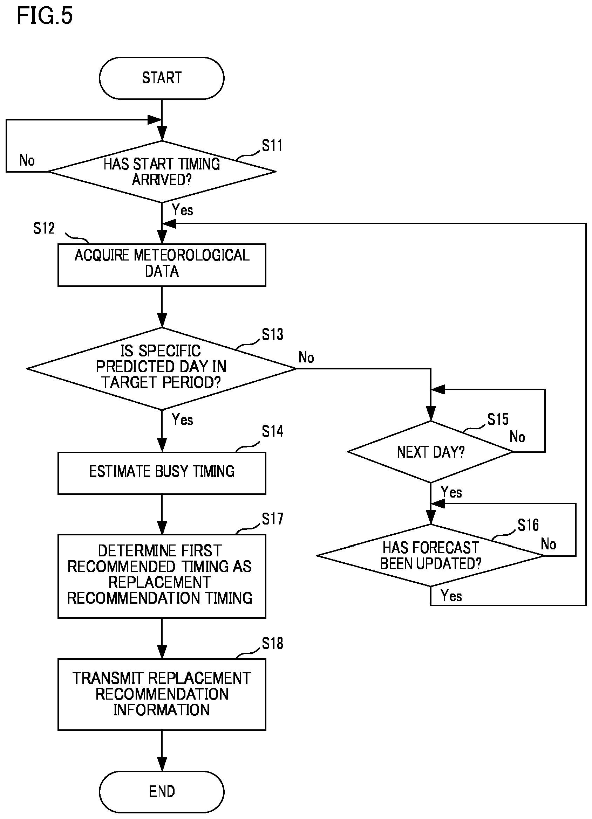

The management server 10 executes a replacement recommendation timing determination process (see FIG. 5, etc.) described later, by using vehicle information (see FIG. 3, FIG. 4) and work history information including the history of tire replacement work stored in the database 30, meteorological prediction information acquired by a so-called weather forecast API or the like through the Internet line, and the like. The replacement recommendation timing determination process includes, for example, an estimation process of estimating a busy timing of the tire replacement work in the tire service shop, a determination process of determining a replacement recommendation timing for the time when the normal tires mounted to the vehicle are replaced with the snow tires, an output process of outputting the replacement recommendation information including the determined replacement recommendation timing, to the information terminal 50, and the like.

The management server 10 is an information processing device or a server device that can execute various arithmetic processes, and specifically, is a computer such as a server computer, a cloud server, or a personal computer connected to the communication network. The management server 10 is not limited to a single computer and may be a computer system in which a plurality of computers operate in cooperation, or a cloud computing system. Various processes executed by the management server 10 may be executed by a single processor or may be executed in a distributed manner by a plurality of processors. In the management server 10, a program or computer software for operating the management system 100 is installed.

The information terminal 50 is communicably connected to the management server 10 through the Internet line. The information terminal 50 is, for example, an information processing device, a portable terminal such as a smartphone or a tablet terminal, an information display device such as digital signage, or the like, used by the vehicle manager that manages the vehicle.

The vehicle manager is, for example, a business company that owns one or a plurality of vehicles, and specifically, a transportation provider that owns one or a plurality of vehicles and provides transportation services. The transportation provider is, for example, a trucking company, a bus traffic company, a taxi company, or the like.

The vehicle information regarding vehicles owned by the vehicle manager is stored in the database 30 described later, as customer information of the tire service shop. The vehicle information is associated with the vehicle manager.

The vehicle manager may be, for example, an individual who owns one or a plurality of vehicles.

The information terminal 50 to which the replacement recommendation information is outputted may be, for example, a so-called in-vehicle terminal mounted to the vehicle. The information terminal 50 may be a portable terminal owned by the driver of the vehicle. When the vehicle is a so-called connected car having a function as an ICT terminal, the vehicle itself can be considered as a terminal device serving as the output destination to which the replacement recommendation information is outputted.

The information terminal 50 includes a display unit such as a liquid crystal display. When having received the replacement recommendation information outputted from the management server 10, the information terminal 50 displays the replacement recommendation timing included in the replacement recommendation information on a display screen of the display unit. Therefore, the information terminal 50 has installed therein a program or computer software that displays, on the display screen, the replacement recommendation timing received from the management server 10 in cooperation with the management system 100.

The database 30 is a storage device such as an HDD or an SSD communicably connected to the communication network. In the database 30, various types of information and data handled in the management system 100 are stored. The database 30 is configured as an external device such as a storage device in another server device capable of performing data communication with the management server 10, or a network connection-type storage device (Network Attached Storage) connected to a network capable of independently transmitting and receiving data on the communication network. The database 30 may be a so-called cloud storage connected via the Internet line. The database 30 may be a storage device provided in the management server 10. The database 30 may be an external storage device connected via a local network to the management server 10.

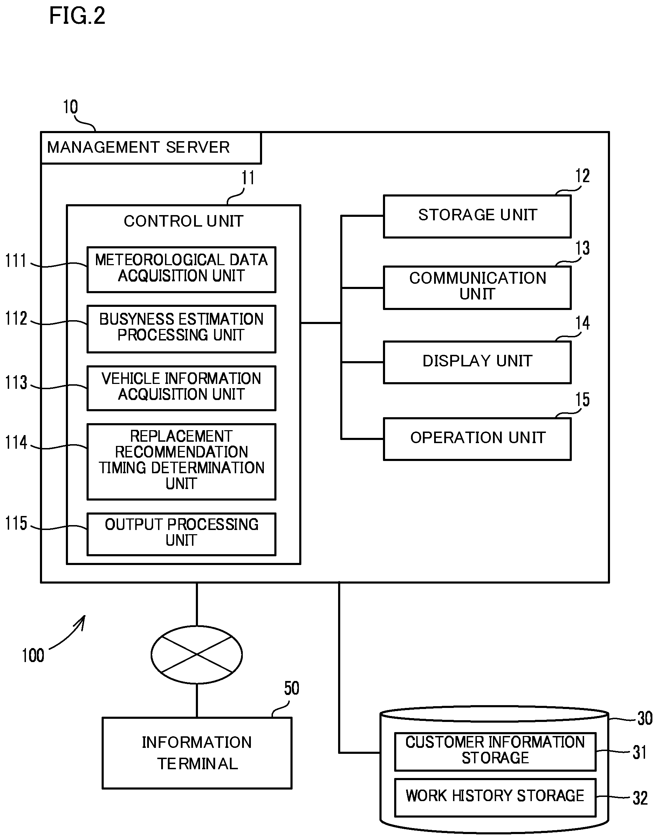

A customer information storage 31 (see FIG. 2) and a work history storage 32 (see FIG. 2) are assigned, as a storage area, to the database 30.

In the customer information storage 31, customer data 311, 312 (see FIG. 3, FIG. 4) including customer information of the tire service shop is stored. The customer data includes a vehicle manager registered as a customer of the tire service shop and vehicle information of the vehicle owned by the vehicle manager.

FIG. 3 shows transportation business customer data 311 showing an example of the customer data when the vehicle manager is a transportation provider.

As shown in FIG. 3, in the transportation business customer data 311, the name (customer name) of a transportation provider, contact information of the transportation provider, the number of owned vehicles, and the like are registered. In addition, in the transportation business customer data 311, vehicle information such as vehicle identification numbers (C11 to C17) of a plurality of vehicles owned by the transportation provider, the type of tires mounted to each vehicle, a passing point (planned passing region) through which the vehicle may travel, and usage of each vehicle is registered. These pieces of information are acquired in advance from the transportation provider, and are registered into the transportation business customer data 311.

The type of tires is normal tire or snow tire, for example.

The passing point is, for example, a specific region on the route where the registered vehicle travels during transportation. Examples of the region to be registered as the specific region include a cold region having a large annual snowfall amount, a high-altitude region such as a mountain region having a relatively high altitude, and the like. When the cold region is included in the passing point, "cold region" is registered in advance in the transportation business customer data 311. When the high-altitude region is included in the passing point, "high-altitude region" is registered in advance in the transportation business customer data 311. The cold region and the high-altitude region are merely examples of the specific region, and are regions where snow is more likely to fall or where road surfaces are more likely to freeze than in other regions such as a warm region and a low-altitude flat land.

The usage is, for example, long-distance transportation, medium-distance transportation, short-distance transportation, or the like. The long-distance transportation is a transportation usage of traveling a route in which the one-way distance to the transportation destination exceeds 300 km, for example. The medium-distance transportation is a transportation usage of traveling a distance in which the one-way distance to the transportation destination is 100 km or more and less than 300 km. The short-distance transportation is a transportation usage of traveling to a plurality of transportation destinations in a range having a radius of 100 km or less, for example. These usages or the distances specified for the respective usages are examples of a planned travel distance of the present disclosure.

FIG. 4 shows individual customer data 312 showing an example of the customer data when the vehicle manager is an individual.

As shown in FIG. 4, in the individual customer data 312, the name (customer name) of a vehicle owner, contact information of the vehicle owner, the number of owned vehicles, and the like are registered. In addition, in the individual customer data 312, vehicle information such as a vehicle identification number (C21 to C26) of the vehicle owned by the vehicle owner, the type of tires mounted to each vehicle, and a use purpose of the vehicle is registered. These pieces of information are acquired in advance from the vehicle owner and are registered into the individual customer data 312.

The type of tires is summer tire or winter tire, for example. The use purpose is commuting to work or leisure, for example. When the use purpose is commuting to work, the use frequency is higher than in the case of leisure, and during snowfall or road surface freezing, the risk due to non-mounting of snow tires to the vehicle is considered to be high.

Various types of information registered in the customer data 311, 312 are read out as necessary by the management server 10, and used in the replacement recommendation timing determination process (see FIG. 5, etc.) described later.

In the work history storage 32, work history data corresponding to the tire service shop is stored. The work history data is data including work history information regarding the tire replacement work in the tire service shop. The work history information includes, for example:
the total number (total number of tire replacements) of tires replaced in a unit period (e.g., one day, one week, one month, etc.); the number of vehicles (number of vehicles) of which tires were replaced; the total time (total work time) of the replacement time required for tire replacement performed by the worker; the average replacement work time required for tire replacement work for one vehicle; the number of tire replacements per worker; the average waiting time (including replacement work time) for a vehicle until completion of tire replacement, and the like. These pieces of information are used in an estimation process performed by a busyness estimation processing unit 112 described later.

### [Management server 10]

In the following, with reference to FIG. 2, a specific configuration of the management server 10 will be described. FIG. 2 is a block diagram showing a configuration of the management server 10.

The management server 10 is for realizing the management system 100 of the present embodiment, and includes a control unit 11, a storage unit 12, a communication unit 13, a display unit 14, and an operation unit 15 as shown in FIG. 2.

The communication unit 13 is a communication interface for connecting the management server 10 to the communication network, executing data communication with the database 30 or the information terminal 50 connected to the communication network, in accordance with a predetermined communication protocol, and providing connection to the Internet line.

The storage unit 12 is a non-volatile storage medium such as an HDD or an SSD having stored therein various types of information. In the storage unit 12, control programs for executing various processes and the replacement recommendation timing determination process described later performed by the control unit 11, data, thresholds, reference values, arithmetic expressions, and the like to be used in various processes are stored.

The display unit 14 is a display device such as a liquid crystal display that displays various types of information. The operation unit 15 is an input device such as a mouse, a keyboard, or a touch panel that receives an operation performed by an operator.

The control unit 11 controls the management server 10. The control unit 11 has control devices such as a CPU, a ROM, and a RAM. The CPU is a processor that executes various arithmetic processes. The ROM is a non-volatile storage medium having stored therein in advance control programs such as BIOS and OS for causing the CPU to execute various arithmetic processes. The RAM is a volatile or non-volatile storage medium having stored therein various types of information and is used as a temporary storage memory (work area) for various arithmetic processes executed by the CPU. The control unit 11 controls the management server 10 by the CPU executing various control programs stored in advance in the ROM or the storage unit 12.

As shown in FIG. 2, the control unit 11 includes various processing units such as a meteorological data acquisition unit 111, the busyness estimation processing unit 112 (an example of an estimation processing unit of the present disclosure), a vehicle information acquisition unit 113, a replacement recommendation timing determination unit 114 (an example of a recommended timing determination unit of the present disclosure), and an output processing unit 115 (an example of an output processing unit of the present disclosure).

The control unit 11 functions as the various processing units by the CPU executing various arithmetic processes according to the control programs. The control unit 11 or the CPU is an example of a computer or a processor that executes the control programs. A part or the entirety of processing units included in the control unit 11 may be implemented by an electronic circuit. The control programs may be programs for causing a plurality of computers or a plurality of processors to function as the various processing units.

The meteorological data acquisition unit 111 performs a process of acquiring meteorological data including meteorological prediction information to be used in the estimation process performed by the busyness estimation processing unit 112. The acquired meteorological prediction information is stored into the storage unit 12 or the like.

The meteorological prediction information is prediction information that predicts a meteorological state after the current day in a specific region or a wide area, for example. The meteorological state that is predicted includes weather or climate such as "sunny", "rainy", "cloudy", "snowy", or "sleety", air temperature such as the minimum air temperature or the maximum air temperature, a precipitation probability indicating the probability of rain or snow falling, a precipitation amount (including a snowfall amount), and the like. The meteorological prediction information also includes prediction information of first snow in a transition period in which the season transitions from summer to winter, prediction information of first frost in the transition period, and the like.

The meteorological data acquisition unit 111 acquires the meteorological data through a website posting a meteorological forecast or a so-called weather forecast API (API: Application Programming Interface) from a database or the like in which data of the meteorological forecast is accumulated, for example. Here, the weather forecast API is also referred to as a meteorological API or a weather forecast API. The issuance source of the meteorological forecast is not particularly limited, but it is preferable that the meteorological forecast is highly reliable forecast information that is issued by an administrative agency such as the Japan Meteorological Agency or a private meteorological provider that performs forecast under permission of the administrative agency, for example.

The meteorological data acquisition unit 111 may acquire, by downloading, the meteorological data including the meteorological prediction information from a meteorological information database connected through the Internet line to the management server 10, for example.

On the basis of the meteorological prediction information acquired by the meteorological data acquisition unit 111, the busyness estimation processing unit 112 performs a process of estimating a busy timing of the tire replacement work in the transition period in this fiscal year performed by the tire service shop (service provider).

For example, with reference to a meteorological forecast of each day in a target period from the current time point to two months ahead, the busyness estimation processing unit 112 judges whether or not the day predicted to have a specific weather condition (hereinafter, referred to as specific predicted day) is in the target period. Specifically, as the specific weather condition, the busyness estimation processing unit 112 judges whether or not the specific predicted day predicted to have first snow or first frost is in the target period. When having judged that the specific predicted day is present, the busyness estimation processing unit 112 estimates, as the busy timing, the period (e.g., one week) from the previous day of the specific predicted day to a predetermined number of days (e.g., seven days) before. The target period is not limited to two months, i.e., from the current time point to two months ahead, and may be one month or three months, for example. The target period may be any period in which the specific weather condition can be predicted.

In general, when the Japan Meteorological Agency or the like announces a first snow forecast or a first frost forecast, demand for tire replacement is concentrated on the timing immediately before the predicted day in which a first snow or first frost phenomenon would occur. In this case, it is known from past experience that the tire replacement work in the tire service shop enters a busy state.

The specific predicted day may be either of the day (first snow predicted day) predicted to have first snow or the day (first frost predicted day) predicted to have first frost, and preferably is the earlier predicted day between the forecasts, for example. The specific predicted day need not necessarily be the first snow predicted day and may be a day for which it has been predicted that snow will fall in a precipitation amount (snowfall amount) having a predetermined value or more. The specific predicted day may be a day for which it has been predicted that a frost index (an index indicating the possibility of frost) provided by the issuance source (the Japan Meteorological Agency, a private meteorological provider, or the like) of the meteorological forecast will have a predetermined value (e.g., 70%) or more. Alternatively, the specific predicted day may be an icing predicted day for which it has been predicted that road surfaces will have icing. In any case, the specific predicted day is the day for which a prediction of occurrence of a weather condition that can make the vehicle manager feel that the normal tires must be replaced with the snow tires has been made.

The busyness estimation processing unit 112 may estimate the busy timing further with reference to the work history data stored in the work history storage 32, in addition to the meteorological prediction information. For example, the busyness estimation processing unit 112 calculates a busyness index of each day in a specific period (e.g., two weeks) before the previous day of the specific predicted day, and estimates, as the busy timing, a day or a period for which the calculated index exceeds a reference value specified in advance. For example, the day in which the busyness index exceeds the reference value and that is closest to the specific predicted day is estimated as the busy timing. Alternatively, a continuous period (e.g., a continuous period of two days or more to less than seven days) in which the busyness index exceeds the reference value and that is closest to the specific predicted day is estimated as the busy timing.

The busyness index is, for example, a weighted average of the total number of tire replacements of each day in the transition period of last year, the number of vehicles of which tires were replaced, the total work time, the number of tire replacements per worker, and the average waiting time, and is an index indicating the busy state of the day.

The vehicle information acquisition unit 113 acquires vehicle information of each customer from the customer data 311, 312. Specifically, from the transportation business customer data 311, the vehicle information acquisition unit 113 acquires the number of vehicles owned by the transportation provider (customer) and the vehicle identification numbers thereof, the type of tires mounted to each vehicle, the passing point, the usage (transportation usage), and the like. In addition, from the individual customer data 312, the vehicle information acquisition unit 113 acquires the number of vehicles owned by the individual customer and the vehicle identification numbers thereof, the type of tires mounted to each vehicle, the use purpose of each vehicle, and the like. From the customer data 311, 312, the vehicle information acquisition unit 113 also acquires the contact information of each customer and the vehicle identification number. The information acquired by the vehicle information acquisition unit 113 is used in the replacement recommendation timing determination process (see FIG. 5, etc.) described later.

The replacement recommendation timing determination unit 114 performs a process of determining a replacement recommendation timing in which normal tires (first tire) mounted to the estimation target vehicle are replaced with snow tires (second tire) of a type different from that of the normal tires. The replacement recommendation timing determination unit 114 determines, as the replacement recommendation timing, a timing that is separated before or after, by the set period T0 specified in advance, the busy timing estimated by the busyness estimation processing unit 112.

In the present embodiment, described is a processing example in which the replacement recommendation timing determination unit 114 determines, as the replacement recommendation timing, a timing that is before the busy timing and that is a day or a period (hereinafter, referred to as first recommended timing) that is before, by the set period T0, the first day of the busy timing.

The replacement recommendation timing may be, for example, a timing that is after the busy timing and that is a day or a period (hereinafter, referred to as second recommended timing) that is after, by the set period T0, the busy timing. That is, the replacement recommendation timing may be a day or a period that is after, by the set period T0, the last day of the busy timing.

In the present embodiment, the replacement recommendation timing determination unit 114 determines the replacement recommendation timing to be the first recommended timing, when the place of the tire service shop is in a cold region specified in advance. Regarding the judgment as to whether or not the place of the tire service shop is in the cold region, for example, when map information including the position information of the cold region and address information of the tire service shop are referred to, and the place of the tire service shop is included in the cold region, it is judged that the place of the tire service shop is in the cold region. The map information and the address information of the tire service shop are stored in the storage unit 12.

The cold region is a region referred to as a so-called snowfall zone, and for example, is a region in which the annual snow accumulation period is a prescribed number of days (e.g., 90 days) or more, and the annual average air temperature is a predetermined temperature (e.g., 10°C) or less.

The replacement recommendation timing determination unit 114 judges whether or not the passing point acquired from the transportation business customer data 311 includes the cold region specified in advance, and when the passing point includes the cold region, may judge the replacement recommendation timing to be the first recommended timing. The replacement recommendation timing determination unit 114 judges that the passing point includes the cold region only when the cold region is registered in the transportation business customer data 311.

The replacement recommendation timing determination unit 114 judges whether or not the passing point acquired from the transportation business customer data 311 includes a high-altitude region specified in advance, and when the passing point includes the high-altitude region, may judge that the replacement recommendation timing to be the first recommended timing. The replacement recommendation timing determination unit 114 judges that the passing point includes the high-altitude region only when the high-altitude region is registered in the transportation business customer data 311.

The high-altitude region is a region where the altitude has a predetermined height (e.g., 500 m) or more, for example, and a region where snow is more likely to fall or road surfaces are likely to freeze than in a low-altitude flat land.

The replacement recommendation timing determination unit 114 judges whether or not the planned travel distance of the vehicle is equal to or larger than a reference distance specified in advance, and when the planned travel distance is equal to or larger than the reference distance, performs a process of determining the replacement recommendation timing to be the first recommended timing. Specifically, the replacement recommendation timing determination unit 114 judges whether or not the usage acquired from the transportation business customer data 311 is a transportation usage of traveling the reference distance or more, and when the usage is the transportation usage of traveling the reference distance or more, determines the replacement recommendation timing to be the first recommended timing.

The planned travel distance is a one-way distance of traveling in one time of transportation, for example. For example, the reference distance is specified to a distance with which the usage can be distinguished between the short-distance transportation and the medium-distance transportation, and is specified to 100 km in the present embodiment.

The output processing unit 115 performs a process of outputting results of various processes executed in the management system 100. In the present embodiment, the output processing unit 115 outputs replacement recommendation information including the replacement recommendation timing determined by the replacement recommendation timing determination unit 114, to the information terminal 50 used by the vehicle manager. Specifically, the output processing unit 115 performs a process of transmitting the replacement recommendation information to the mail address registered in the information terminal 50. Alternatively, the output processing unit 115 performs a process of displaying the recommended timing on the display unit of the information terminal 50 through a website when a transmission request has been received from the information terminal 50 through the Internet line.

Since the replacement recommendation timing (first recommended timing) determined as above is outputted to the information terminal 50, the vehicle manager can easily and assuredly grasp the replacement recommendation timing recommended by the tire service shop. Since the replacement recommendation timing (first recommended timing) is outputted to the information terminal 50, the tire service shop can urge the vehicle manager to perform replacement early. Accordingly, tire replacement demand in the busy timing can be dispersed, and as a result, the work burden in the busy timing can be reduced, and the efficiency in the tire replacement work can be improved.

If the normal tires are replaced with the snow tires in the replacement recommendation timing recommended by the tire service shop, the vehicle manager need not worry about the vehicle falling into a poor traveling state due to snowfall, road surface freezing, or road surface icing. In addition, for the vehicle manager, if the normal tires are replaced with the snow tires in a timing outside the busy timing of the tire replacement work, the waiting time required for the tire replacement is decreased. Therefore, decrease in operating hours of business vehicles or the like can be prevented. In addition, for the driver as well, the waiting time required for the tire replacement can be decreased. In addition, even if the forecast is wrong and the driver encounters snowfall, road surface freezing, road surface icing, or the like having occurred earlier than the specific predicted day, the driver can drive, with peace of mind, the vehicle of which the tires have been replaced with the snow tires early. Further, since the replacement recommendation timing is a timing separated so as to be before the busy timing, the vehicle manager can avoid the risk of replacing tires in the busy timing, such as, for example, increase in personnel expense due to causing the driver to wait for a long time until finish of the replacement work, or loss of transportation opportunities due to causing the vehicle to wait for a long time.

The replacement recommendation information outputted by the output processing unit 115 may include not only the replacement recommendation timing but also benefit information beneficial to the vehicle manager, for example, information indicating that the risk regarding personnel expense described above can be avoided, the risk regarding loss of transportation opportunities can be avoided, and the like. When traveling on snowy road with the normal tires is restricted by predetermined rules, laws, or the like, restriction information indicating the same may also be included in the replacement recommendation information.

### [Replacement recommendation timing determination process]

In the following, with reference to the flowcharts in FIG. 5 to FIG. 8, an example of a procedure of a replacement recommendation timing determination process executed in the management system 100 and a tire replacement recommendation method of the present disclosure will be described. In the following, the replacement recommendation timing determination process executed by the control unit 11 of the management server 10 will be described. The replacement recommendation timing determination process is executed for each of all the customers registered in the customer data 311, 312. Here, the replacement recommendation timing determination process includes a process of estimating the busy timing in the tire service shop, a process of determining the recommended timing, and a process of outputting the estimated timing.

One or a plurality of steps included in the replacement recommendation timing determination process described below may be omitted as appropriate. The execution order of the steps in the replacement recommendation timing determination process may be different as long as the same effects can be obtained. Further, in the following, a case in which one processor corresponding to the control unit 11 executes the process in each step in the replacement recommendation timing determination process will be described as an example. However, a plurality of processors may execute the steps in the replacement recommendation timing determination process in a distributed manner.

### [First processing example]

First, with reference to the flowchart in FIG. 5, a first processing example, which is an example of the replacement recommendation timing determination process, will be described.

As shown in FIG. 5, in step S11, the control unit 11 judges whether the start timing of the replacement recommendation timing determination process has arrived. For example, the control unit 11 judges whether the current day and time have reached a predetermined date, by using a clock function, a calendar function, or the like installed in the management server 10. In the present embodiment, the predetermined date is specified to a date (in Japan, September 1) three months before the first day of the month (in Japan, December) when winter begins in terms of the calendar, for example.

When it has been judged that the start timing has arrived in step S11, the control unit 11 performs a process of acquiring the meteorological data of the region where the tire service shop is present (S12). The process is performed by the meteorological data acquisition unit 111.

Subsequently, with reference to the acquired meteorological data, the control unit 11 performs a process of judging whether or not the specific predicted day is in the target period from the current time point to two months ahead (S13). When it has been judged that the specific predicted day is in the target period in step S13, the control unit 11 estimates the busy timing regarding the tire replacement work in the transition period of this fiscal year on the basis of the specific predicted day by the above-described method (S14). The process in step S13 and the process in step S14 are processes performed by the busyness estimation processing unit 112 and are an example of an estimation step of the present disclosure.

When it has been judged that the specific predicted day is not in the target period in step S13, the control unit 11 does not estimate the busy timing, and when it has been judged that the day has changed to the next day (Yes in S15), the control unit 11 judges whether or not the meteorological data has been updated (S16). Then, when it has been judged that the meteorological data has been updated (Yes in S16), the control unit 11 repeatedly executes the processes in step S12 and thereafter.

When the busy timing has been estimated, the control unit 11, in the next step S17, determines the first recommended timing that is before, by the set period T0, the first day of the busy timing, as the replacement recommendation timing. The process is a process performed by the replacement recommendation timing determination unit 114 and is an example of a recommended timing determination step of the present disclosure.

Then, the control unit 11 performs a process of transmitting, to the information terminal 50, the replacement recommendation information including the replacement recommendation timing, the risk of loss of the transportation opportunities, or the restriction information (S18). The process is a process performed by the output processing unit 115 and is an example of an output step of the present disclosure.

As described above, the management system 100 of the present embodiment: performs a process of estimating the busy timing of tire replacement work in the tire service shop that provides a tire replacement service for a vehicle, on the basis of meteorological prediction information; performs a process of determining the replacement recommendation timing in which the normal tires (first tire) mounted to the vehicle to be subjected to the tire replacement service are replaced with the snow tires (second tire) of a different type, to be a first recommended timing that is separated before, by the set period T0 specified in advance, the busy timing; and performs a process of outputting the replacement recommendation information including the determined replacement recommendation timing, to the information terminal 50 used by the vehicle manager.

Accordingly, the vehicle manager can grasp easily and assuredly the replacement recommendation timing that is highly reliable. In addition, since the replacement recommendation timing is outputted to the information terminal 50, the tire service shop can urge the vehicle manager to perform early tire replacement at an optimum timing. Accordingly, the tire replacement demand in the busy timing can be dispersed, and as a result, the work burden in the busy timing can be reduced, and the efficiency in the tire replacement work can be improved.

If the normal tires are replaced with the snow tires in the replacement recommendation timing recommended by the tire service shop, the vehicle manager need not worry about the vehicle falling into a poor traveling state due to snowfall or road surface freezing. In addition, even if the forecast is wrong and the driver encounters snowfall or road surface freezing having occurred earlier than the specific predicted day, the driver can drive the vehicle with peace of mind. Further, since the replacement recommendation timing is a timing separated from the busy timing, the vehicle manager can avoid the risk of replacing tires in the busy timing, such as, for example, increase in personnel expense due to causing the driver to wait for a long time until finish of the replacement work, or loss of transportation opportunities due to causing the vehicle to wait for a long time.

If the replacement recommendation information that is outputted includes not only the replacement recommendation timing but also the above-described benefit information beneficial to the vehicle manager, the motivation of the vehicle manager to replace the tires early can be enhanced.

### [Second processing example]

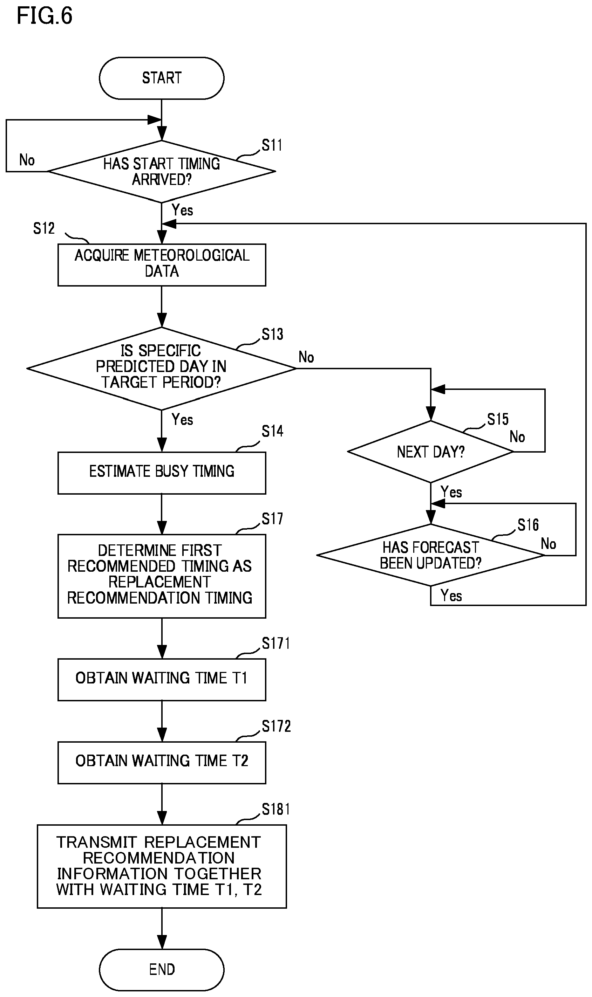

Next, with reference to the flowchart in FIG. 6, a second processing example, which is another example of the replacement recommendation timing determination process, will be described. In the following, only the parts different from those in the first processing example described above will be described.

When the replacement recommendation timing has been determined in step S17 after the busy timing has been estimated, the control unit 11, in the next step S171, performs a process of obtaining a waiting time T1 (an example of a first work waiting time of the present disclosure) in the busy timing (hereinafter, referred to as previous year busy timing) of the previous fiscal year, on the basis of the work history data. Here, the waiting time T1 is the average waiting time in the previous year busy timing, for example. In the present embodiment, the control unit 11 judges the continuous period in which the busyness index calculated on the basis of the work history data exceeds the reference value, to be the previous year busy timing. Then, the control unit 11 performs a process of extracting the average waiting time in the previous year busy timing from the work history data, and setting the average waiting time as the waiting time T1. The control unit 11 may calculate the waiting time T1 by multiplying the average replacement work time in the previous year busy timing included in the work history data by the number of tire replacements per worker.

In the next step S172, the control unit 11 performs a process of obtaining a waiting time T2 (an example of a second work waiting time of the present disclosure) in the replacement recommendation timing determined in step S17. Here, the waiting time T2 is a time equivalent to the average replacement work time required for the tire replacement work of one vehicle when it is assumed that the wait time until start of the replacement work is zero, for example. Alternatively, the waiting time T2 may be a time equivalent to the average waiting time of ordinary workdays excluding the previous year busy timing among workdays of the previous fiscal year, for example. The waiting time T2 may be stored in advance in the storage unit 12 or may be extracted from the work history data every time the process in step S172 is performed.

Then, in step S181, the control unit 11 performs a process of transmitting, to the information terminal 50, the waiting time T1 and the waiting time T2 together with the replacement recommendation information.

The control unit 11 may output, to the information terminal 50, a shortened time obtained by subtracting the waiting time T2 from the waiting time T1, together with the replacement recommendation information.

As described above, since the waiting time T1 and the waiting time T2, or the shortened time is transmitted to the information terminal 50, the vehicle manager can easily grasp the difference between the waiting times, between a case where the tires are replaced in the replacement recommendation timing and a case where the tires are replaced in the busy timing. As a result, the motivation of the vehicle manager to replace the tires early can be enhanced.

### [Third processing example]

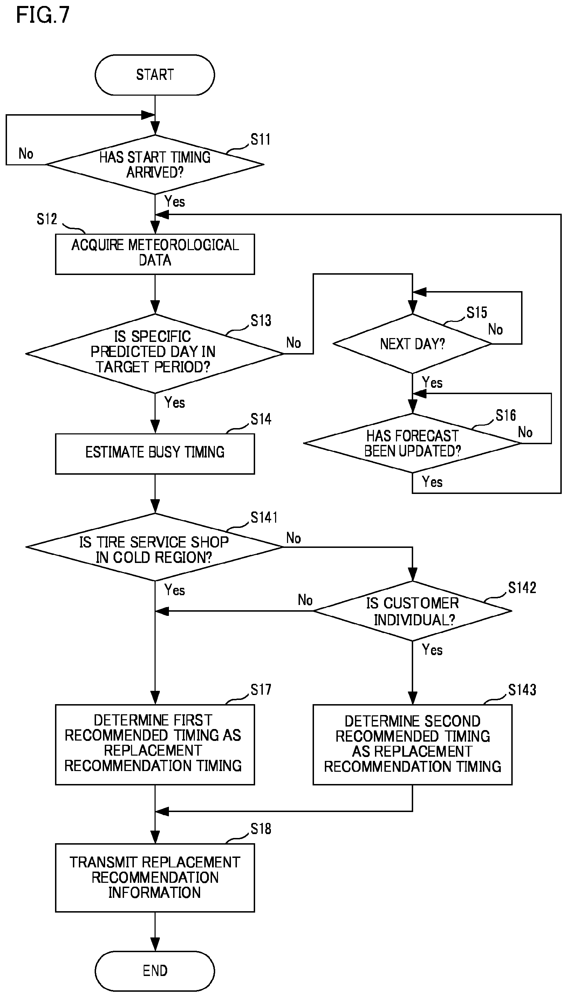

Next, with reference to the flowchart in FIG. 7, a third processing example, which is another example of the replacement recommendation timing determination process, will be described. In the following, only the parts different from those in the first processing example described above will be described.

When the busy timing has been estimated in step S14, the control unit 11, then, in the next step S141, judges whether or not the place of the tire service shop is in the cold region. The process is executed by the replacement recommendation timing determination unit 114.

In step S141, when it has been judged that the place of the tire service shop is in the cold region, the control unit 11 performs the determination process in step S17, and then, performs the transmission process in step S18.

On the other hand, in step S141, when it has been judged that the place of the tire service shop is not in the cold region, the process proceeds to step S142.

When the tire service shop that performs the tire replacement service is not in the cold region, for example, a region where snow does not fall much, or a region where road surfaces do not freeze much, there is a high possibility that snow will soon melt even if it snows, and there is a high possibility that ice on the road surfaces will soon melt even if they freeze. Therefore, in such regions, even if a snowfall forecast or a freezing forecast is issued, there is little possibility that demand for tire replacement is concentrated on the timing immediately therebefore. Therefore, in a case where the tire service shop is not in the cold region, if a predetermined judgement condition in step S142 is satisfied, the control unit 11 determines the second recommended timing that is after, by the set period T0, the busy timing, as the replacement recommendation timing (S143).

In the present embodiment, as described below, a processing example in which when the judgement condition in step S142 is satisfied, the process in step S143 is performed, is shown as an example. However, for example, when it has been judged that the place of the tire service shop is not in the cold region in step S141, the determination process in step S143 may be performed.

In step S142, the control unit 11 judges whether or not the vehicle manager (a customer registered in the customer data 311, 312) being the target of the replacement recommendation timing determination process is an individual. The judgement is performed on the basis of information included in the customer data 311, 312 stored in the customer information storage 31. When the vehicle manager is a transportation provider, it is more preferable that tire replacement is recommended so as to be before the busy timing estimated in step S14, with business profits and the safety of the vehicle of the transportation provider prioritized. Therefore, when it has been judged that the vehicle manager is a transportation provider (No in S142), the control unit 11 proceeds to step S17 and performs the processes in step S17 and thereafter.

On the other hand, when the vehicle manager is an individual, the necessity of prioritizing business profits and the like as in the case of the transportation provider is low. Therefore, when the tire service shop is not in the cold region, it may be preferable that tire replacement is recommended so as to be after the busy timing. Therefore, when it has been judged that the vehicle manager is an individual (Yes in S142), the control unit 11 proceeds to step S143 and executes the determination process in step S143. Then, the control unit 11 performs the transmission process in step S18.

### [Fourth processing example]

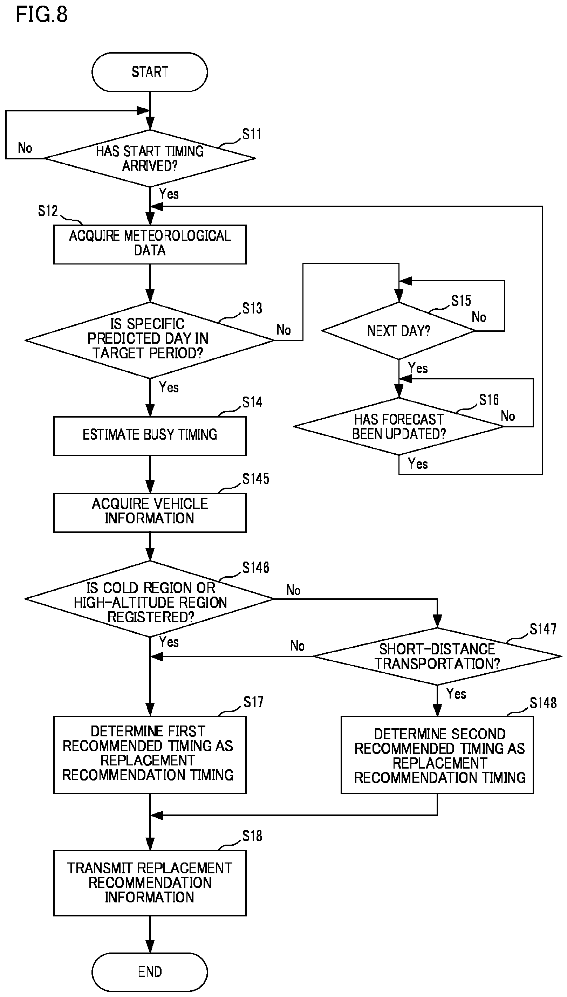

Next, with reference to the flowchart in FIG. 8, a fourth processing example, which is another example of the replacement recommendation timing determination process, will be described. In the following, only the parts different from those in the first processing example described above will be described.

When the busy timing has been estimated in step S14, the control unit 11, then, in the next step S145, acquires the vehicle information from the customer data 311, 312. Then, in step S146, it is judged whether or not the cold region or the high-altitude region is registered as the passing point. The process is executed by the replacement recommendation timing determination unit 114.

When the cold region or the high-altitude region is present as the passing point of the travel route of the vehicle, it is more preferable to recommend the tire replacement so as to be before the busy timing estimated in step S14, with the safety of the vehicle prioritized. Therefore, in this case, the control unit 11 proceeds to step S17, performs the processes in step S17 and thereafter, and then, performs the transmission process in step S18.

On the other hand, in step S146, when it has been judged that the cold region and the high-altitude region are absent as the passing point of the travel route of the vehicle, the process proceeds to step S147.

When the cold region and the high-altitude region are absent as the passing point of the travel route of the vehicle, there is little possibility that the road on the travel route has snow accumulated or freezes and the travel is hindered before the date for which a snowfall forecast or a freezing forecast has been issued. Therefore, when the cold region and the high-altitude region are not registered as the passing point, if a predetermined judgement condition in step S147 is satisfied, the control unit 11 determines the second recommended timing that is after, by the set period T0, the busy timing, as the replacement recommendation timing (S148).

In the present embodiment, as described below, a processing example in which when the judgement condition in step S147 is satisfied, the process in step S148 is performed, is shown as an example. However, for example, when it has been judged that the cold region and the high-altitude region are not registered as the passing point in step S146, the determination process in step S148 may be performed.

In step S147, the control unit 11 judges whether or not: the vehicle manager being the target of the replacement recommendation timing determination process is a transportation provider; and the usage of the vehicle thereof is short-distance transportation. The judgement is performed on the basis of information regarding usage included in the customer data 311 stored in the customer information storage 31. When the vehicle manager is a transportation provider and the usage of the vehicle thereof is a usage of transporting in a medium distance or more, there is a high possibility of falling into poor traveling due to snow accumulation or freezing of the road during a long distance travel. Therefore, in this case, it is more preferable to recommend the tire replacement so as to be before the busy timing estimated in step S14, with business profits and the safety of the vehicle of the transportation provider prioritized. Therefore, when it has been judged that the usage of the vehicle is the medium-distance transportation or the long-distance transportation (No in S147), the control unit 11 proceeds to step S17 and performs the processes in step S17 and thereafter.

On the other hand, when the usage of the vehicle is the short-distance transportation, the possibility of falling into poor traveling due to snow accumulation or freezing of the road is considered to be low. In this case, it may be more preferable to recommend the tire replacement so as to be after the busy timing. Therefore, when it has been judged that the usage of the vehicle is the short-distance transportation (Yes in S147), the control unit 11 proceeds to step S148 and executes the determination process in step S148. Then, the control unit 11 performs the transmission process in step S18.

In the fourth processing example described above, in step S146, it is judged whether or not the cold region and the high-altitude region are present as the passing point of the travel route of the vehicle. However, the present invention is not limited to such a processing example. For example, after the vehicle information has been acquired in step S145, the judgement process in step S147 may be performed without performing the process in step S146. That is, irrespective of the region registered as the passing point, when the usage is the medium-distance transportation or the long-distance transportation, the determination process in step S17 may be performed, and when the usage is the short-distance transportation, the determination process in step S148 may be performed.

### [Second embodiment]

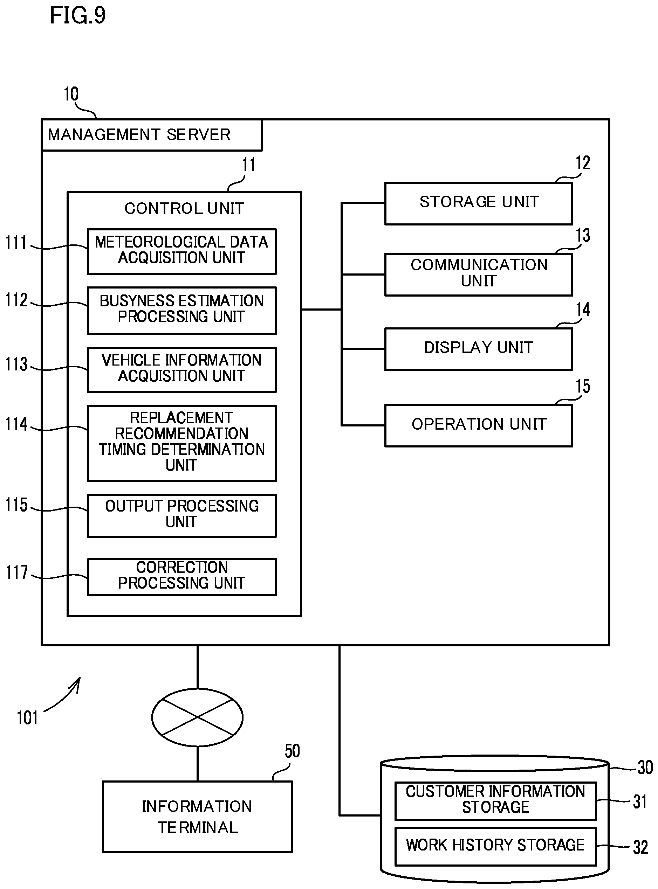

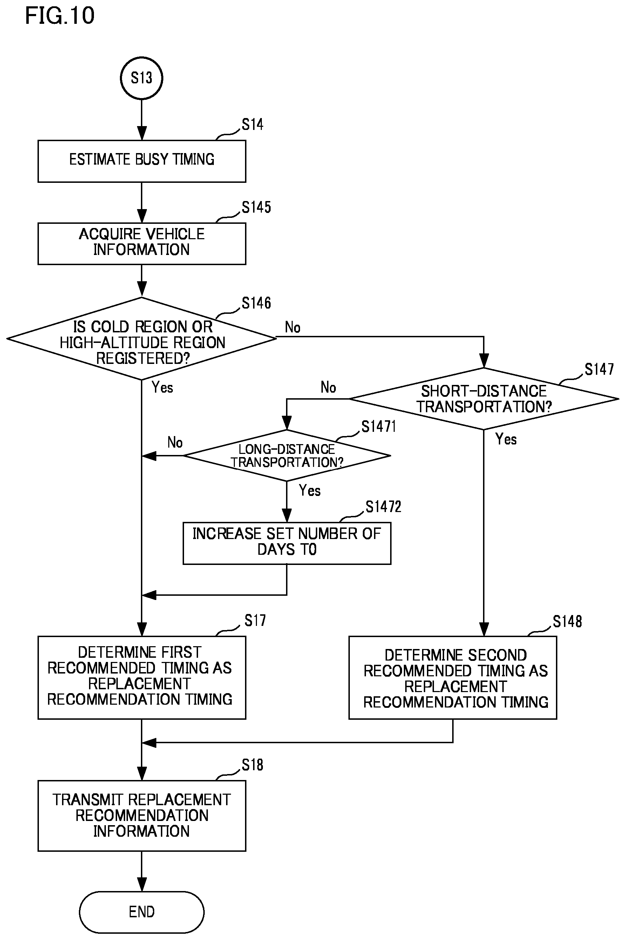

In the following, with reference to FIG. 9 and FIG. 10, a tire replacement management system 101 (hereinafter, simply referred to as management system 101) according to a second embodiment of the present disclosure will be described. In the present embodiment, only the parts different from those in the first embodiment described above will be described, configurations common with those in the first embodiment described above are denoted by the same reference characters, and detailed description thereof is omitted.

Similar to the management system 100 described above, the management system 101 is composed of the management server 10 and the database 30.

As shown in FIG. 9, the control unit 11 of the management server 10 includes the meteorological data acquisition unit 111, the busyness estimation processing unit 112 (an example of the estimation processing unit of the present disclosure), the vehicle information acquisition unit 113, the replacement recommendation timing determination unit 114 (an example of the recommended timing determination unit of the present disclosure), and the output processing unit 115 (an example of the output processing unit of the present disclosure), and in addition, a correction processing unit 117 (an example of a correction processing unit of the present disclosure).

The correction processing unit 117 performs a process of increasing the set period T0 when the planned travel distance of the vehicle included in the vehicle information acquired by the vehicle information acquisition unit 113 is equal to or larger than a predetermined set distance that is longer than the reference distance. Specifically, when it has been judged that the usage of the vehicle is the long-distance transportation, the correction processing unit 117 performs correction of increasing the set period T0 by a predetermined number of days. The predetermined number of days can be arbitrarily specified and is specified as one week in the present embodiment, for example. Being judged as the long-distance transportation is synonymous with that the planned travel distance of the vehicle is judged to be 300 km or more. Therefore, in the present embodiment, the set distance is specified to be 300 km.

### [Fifth processing example]

Next, with reference to the flowchart in FIG. 10, a fifth processing example, which is another example of the replacement recommendation timing determination process, will be described. In the following, only the parts different from those in the fourth processing example described above will be described.

In step S146, when it has been judged that the cold region or the high-altitude region is absent as the passing point of the travel route of the vehicle, and then, in step S147, it has been judged that the usage is not the short-distance transportation, the control unit 11 proceeds to step S1471.

In step S1471, the control unit 11 judges whether or not the usage is the long-distance transportation. Then, when it has been judged that the usage is not the long-distance transportation (No in S1471), the control unit 11 proceeds to step S17, performs the processes in step S17 and thereafter, and then, performs the transmission process in step S18.

On the other hand, in step S1471, when it has been judged that the usage is the long-distance transportation, the control unit 11 performs correction of increasing the set period T0 by a predetermined number of days in the next step S1472. Then, in step S17, the control unit 11 determines, as the replacement recommendation timing, the first recommended timing that is before, by the corrected set period T0, the first day of the busy timing.

The risk of falling into poor traveling due to snow accumulation or freezing of the road during traveling a long distance is higher during the long-distance transportation than during the medium-distance transportation. Therefore, as described above, when the replacement recommendation timing in a case where the usage of the vehicle is the long-distance transportation is determined to be a timing earlier than the replacement recommendation timing in the case of the medium-distance transportation, the replacement recommendation timing that is more appropriate can be communicated to the vehicle manager with the safety of the vehicle used in the long-distance transportation further prioritized.

### [Third embodiment]

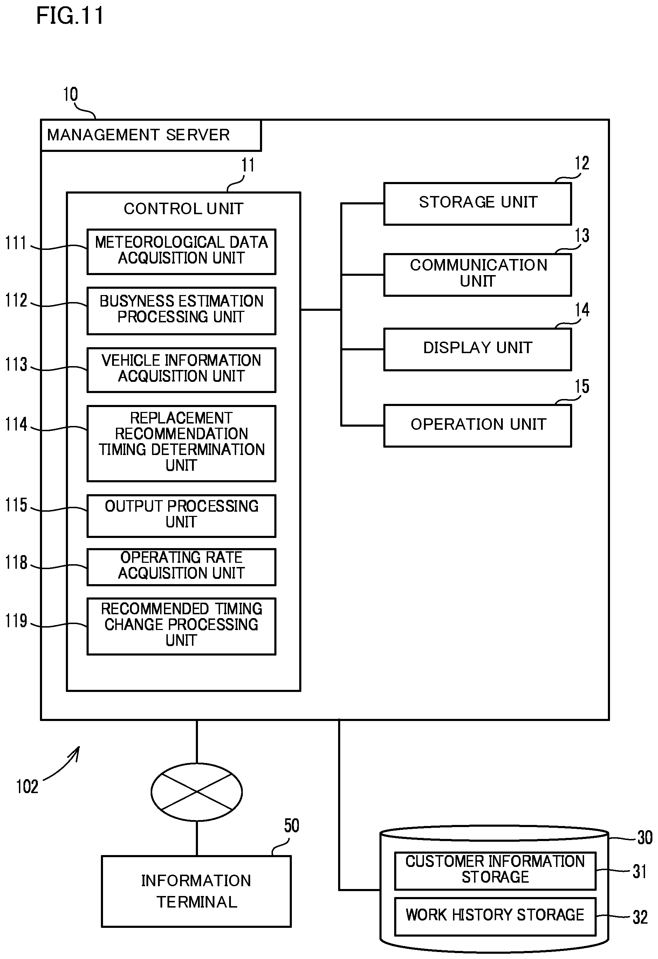

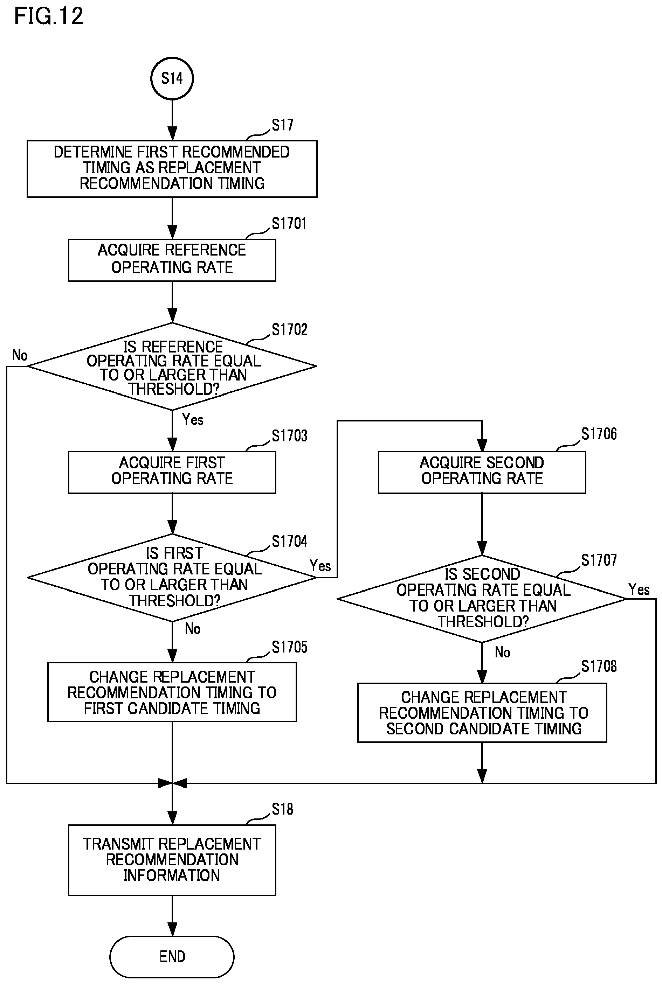

In the following, with reference to FIG. 11 and FIG. 12, a tire replacement management system 102 (hereinafter, simply referred to as management system 102) according to a third embodiment of the present disclosure will be described. In the present embodiment, only the parts different from those in the first embodiment described above will be described, configurations common with those in the first embodiment described above are denoted by the same reference characters, and detailed description thereof is omitted.

Similar to the management system 100 described above, the management system 102 is composed of the management server 10 and the database 30.

As shown in FIG. 11, the control unit 11 of the management server 10 includes the meteorological data acquisition unit 111, the busyness estimation processing unit 112 (an example of the estimation processing unit of the present disclosure), the vehicle information acquisition unit 113, the replacement recommendation timing determination unit 114 (an example of the recommended timing determination unit of the present disclosure), and the output processing unit 115 (an example of the output processing unit of the present disclosure), and in addition, an operating rate acquisition unit 118 (an example of an operating rate acquisition unit of the present disclosure) and a recommended timing change processing unit 119 (an example of a timing change processing unit of the present disclosure).

When the vehicle manager is a transportation provider, the operating rate acquisition unit 118 performs a process of acquiring an operating rate of the vehicle thereof. For example, when the operating rate per day in the past of the vehicle of the vehicle manager is registered in advance in the transportation business customer data 311, the operating rate acquisition unit 118 acquires the operating rate from the transportation business customer data 311.

The recommended timing change processing unit 119 extracts, out of the operating rate acquired by the operating rate acquisition unit 118, the operating rate at the same timing as the replacement recommendation timing in the previous fiscal year and specifies the operating rate as an estimation operating rate (hereinafter, referred to as reference operating rate) in the replacement recommendation timing of this fiscal year. Then, when the reference operating rate is equal to or larger than a predetermined threshold, the recommended timing change processing unit 119 performs a process of changing the replacement recommendation timing determined by the replacement recommendation timing determination unit 114. The threshold is a threshold for determining whether or not the transportation business of the vehicle manager is in a busy state.

Specifically, when the reference operating rate is equal to or larger than the threshold, the recommended timing change processing unit 119 specifies a first candidate timing that is before, by a predetermined number of days (e.g., one week), the replacement recommendation timing. Then, a past operating rate (hereinafter, referred to as first operating rate) at the same timing as the first candidate timing is extracted from the transportation business customer data 311, and when the first operating rate is less than the threshold, the replacement recommendation timing is changed to the first candidate timing. Thus, when the replacement recommendation timing is changed to the first candidate timing, the replacement recommendation timing that is outside the timing when the vehicle manager is in a busy state can be communicated to the vehicle manager.

When the first operating rate is equal to or larger than the threshold, the recommended timing change processing unit 119 specifies a second candidate timing that is after, by the predetermined number of days, the recommended timing. Then, a past operating rate (hereinafter, referred to as second operating rate) at the same timing as the second candidate timing is extracted from the transportation business customer data 311, and when the second operating rate is less than the threshold, the replacement recommendation timing is changed to the second candidate timing. In this manner, when the first candidate timing is not appropriate as the replacement recommendation timing, the replacement recommendation timing is changed to the second candidate timing. In this case as well, the replacement recommendation timing that is outside the timing when the vehicle manager is in a busy state can be communicated to the vehicle manager.

### [Sixth processing example]

Next, with reference to the flowchart in FIG. 12, a sixth processing example, which is another example of the replacement recommendation timing determination process, will be described. In the following, only the parts different from those in the first processing example described above will be described.

In step S17, when the replacement recommendation timing has been determined, the control unit 11 performs a process of acquiring the reference operating rate in step S1701. The process is performed by the operating rate acquisition unit 118.

In the next step S1702, the control unit 11 judges whether or not the reference operating rate is equal to or larger than the threshold.

In step S1702, when it has been judged that the reference operating rate is less than the threshold, the control unit 11 proceeds to step S18, and performs the process of transmitting the replacement recommendation information to the information terminal 50. When the reference operating rate is less than the threshold, replacement recommendation timing is estimated to be a timing when the transportation business of the vehicle manager is not in a busy state.

On the other hand, in step S1702, when it has been judged that the reference operating rate is equal to or larger than the threshold, the control unit 11 acquires the first operating rate (S1703) and judges whether or not the first operating rate is equal to or larger than the threshold (S1704).

In step S1704, when it has been judged that the first operating rate is less than the threshold, the control unit 11 changes, in step S1705, the replacement recommendation timing to the first candidate timing, and then, in step S18, transmits the replacement recommendation information including the changed replacement recommendation timing, to the information terminal 50.

In step S1704, when it has been judged that the first operating rate is equal to or larger than the threshold, the control unit 11 acquires the second operating rate (S1706), and judges whether or not the second operating rate is equal to or larger than the threshold (S1707).

In step S1707, when it has been judged that the second operating rate is less than the threshold, the control unit 11 changes, in step S1708, the replacement recommendation timing to the second candidate timing, and then, in step S18, transmits the replacement recommendation information including the changed replacement recommendation timing, to the information terminal 50.

In step S1707, when it has been judged that the second operating rate is equal to or larger than the threshold, the replacement recommendation information is transmitted to the information terminal 50 without changing the replacement recommendation timing.

The present disclosure is not limited to the embodiments described above, and various modifications can be made within the scope of the claims. Embodiments obtained by combining as appropriate technological means disclosed in the embodiments are also included in the technical scope of the present disclosure.

The embodiments of the present disclosure described above include disclosure items (1) to (13) described below.

A tire replacement management system according to a disclosure item (1) includes: an estimation processing unit configured to estimate a busy timing of tire replacement work performed by a service provider that provides a tire replacement service for a vehicle, on the basis of meteorological prediction information; a recommended timing determination unit configured to determine a recommended timing in which a first tire mounted to the vehicle to be subjected to the tire replacement service is replaced with a second tire different from the first tire, to be a timing separated, by a set period specified in advance, from the busy timing; and an output processing unit configured to output the recommended timing determined by the recommended timing determination unit, to a terminal device used by a manager of the vehicle.

In a disclosure item (2) based on the tire replacement management system according to the disclosure item (1), the output processing unit outputs, to the terminal device, a first work waiting time when the tire is replaced in the busy timing, and a second work waiting time when the tire is replaced in the recommended timing, together with the recommended timing.

In a disclosure item (3) based on the tire replacement management system according to the disclosure item (1), the output processing unit outputs, to the terminal device, a shortened time obtained by subtracting a second work waiting time when the tire is replaced in the recommended timing from a first work waiting time when the tire is replaced in the busy timing, together with the recommended timing.

In a disclosure item (4) based on the tire replacement management system according to the disclosure item (1), the output processing unit outputs, to the terminal device, benefit information including a benefit of performing tire replacement in the recommended timing, together with the recommended timing.

In a disclosure item (5) based on the tire replacement management system according to any one of the disclosure items (1) to (4), the recommended timing determination unit judges whether or not a provision place of the tire replacement service is in a cold region specified in advance, and determines the recommended timing to be a timing that is before, by the set period, the busy timing, when the provision place is in the cold region.

In a disclosure item (6) based on the tire replacement management system according to any one of the disclosure items (1) to (4), the recommended timing determination unit acquires vehicle information including a planned travel range of the vehicle, judges whether or not the planned travel range includes a cold region specified in advance or a high-altitude region specified in advance, and determines the recommended timing to be a timing that is before, by the set period, the busy timing when the planned travel range includes the cold region or the high-altitude region.

In a disclosure item (7) based on the tire replacement management system according to any one of the disclosure items (1) to (4), the recommended timing determination unit acquires vehicle information including a planned travel distance of the vehicle, judges whether or not the planned travel distance is equal to or larger than a reference distance specified in advance, and determines the recommended timing to be a timing that is before, by the set period, the busy timing when the planned travel distance is equal to or larger than the reference distance.

A disclosure item (8) based on the tire replacement management system according to the disclosure item (7) further includes a correction processing unit configured to increase the set period when the planned travel distance is equal to or larger than a predetermined set distance that is longer than the reference distance.

A disclosure item (9) based on the tire replacement management system according to any one of the disclosure items (1) to (4) further includes: an operating rate acquisition unit configured to acquire an operating rate of the vehicle; and a timing change processing unit configured to change the recommended timing when the operating rate of the vehicle in the recommended timing is equal to or larger than a predetermined threshold.

In a disclosure item (10) based on the tire replacement management system according to the disclosure item (9), the timing change processing unit specifies a first candidate timing that is before the recommended timing, when the operating rate is equal to or larger than the threshold, and changes the recommended timing to the first candidate timing, when a first operating rate of the vehicle in the first candidate timing is less than the threshold.

In a disclosure item (11) based on the tire replacement management system according to the disclosure item (10), the timing change processing unit specifies a second candidate timing that is after the recommended timing, when the first operating rate is equal to or larger than the threshold, and changes the recommended timing to the second candidate timing, when a second operating rate of the vehicle in the second candidate timing is less than the threshold.

A tire replacement management method according to a disclosure item (12) is a method including: an estimation step of estimating a busy timing of tire replacement work performed by a service provider that provides a tire replacement service for a vehicle, on the basis of meteorological prediction information; a recommended timing determination step of determining a recommended timing in which a first tire mounted to the vehicle to be subjected to the tire replacement service is replaced with a second tire different from the first tire, to be a timing separated, by a set period specified in advance, from the busy timing; and an output step of outputting the recommended timing to a terminal device used by a manager of the vehicle, and is a method of which the steps are executed by one or a plurality of processors or computers.

A program according to a disclosure item (13) is a program for causing one or a plurality of processors to execute: an estimation step of estimating a busy timing of tire replacement work performed by a service provider that provides a tire replacement service for a vehicle, on the basis of meteorological prediction information; a recommended timing determination step of determining a recommended timing in which a first tire mounted to the vehicle to be subjected to the tire replacement service is replaced with a second tire different from the first tire, to be a timing separated, by a set period specified in advance, from the busy timing; and an output step of outputting the recommended timing to a terminal device used by a manager of the vehicle. The present disclosure may be directed to a computer-readable storage medium having the program of the disclosure item (13) stored non-temporarily therein.

## Claims

1. A tire replacement management system comprising:
an estimation processing unit configured to estimate a busy timing of tire replacement work performed by a service provider that provides a tire replacement service for a vehicle, on the basis of meteorological prediction information;
a recommended timing determination unit configured to determine a recommended timing in which a first tire mounted to the vehicle to be subjected to the tire replacement service is replaced with a second tire different from the first tire, to be a timing separated, by a set period specified in advance, from the busy timing; and
an output processing unit configured to output the recommended timing determined by the recommended timing determination unit, to a terminal device used by a manager of the vehicle.

2. The tire replacement management system according to claim 1, wherein
the output processing unit
outputs, to the terminal device, a first work waiting time when the tire is replaced in the busy timing, and a second work waiting time when the tire is replaced in the recommended timing, together with the recommended timing.

3. The tire replacement management system according to claim 1, wherein
the output processing unit
outputs, to the terminal device, a shortened time obtained by subtracting a second work waiting time when the tire is replaced in the recommended timing from a first work waiting time when the tire is replaced in the busy timing, together with the recommended timing.

4. The tire replacement management system according to claim 1, wherein
the output processing unit
outputs, to the terminal device, benefit information including a benefit of performing tire replacement in the recommended timing, together with the recommended timing.

5. The tire replacement management system according to any one of claims 1 to 4, wherein
the recommended timing determination unit judges whether or not a provision place of the tire replacement service is in a cold region specified in advance, and determines the recommended timing to be a timing that is before, by the set period, the busy timing, when the provision place is in the cold region.

6. The tire replacement management system according to any one of claims 1 to 4, wherein
the recommended timing determination unit acquires vehicle information including a planned travel range of the vehicle, judges whether or not the planned travel range includes a cold region specified in advance or a high-altitude region specified in advance, and determines the recommended timing to be a timing that is before, by the set period, the busy timing when the planned travel range includes the cold region or the high-altitude region.

7. The tire replacement management system according to any one of claims 1 to 4, wherein
the recommended timing determination unit acquires vehicle information including a planned travel distance of the vehicle, judges whether or not the planned travel distance is equal to or larger than a reference distance specified in advance, and determines the recommended timing to be a timing that is before, by the set period, the busy timing when the planned travel distance is equal to or larger than the reference distance.

8. The tire replacement management system according to claim 7, further comprising
a correction processing unit configured to increase the set period when the planned travel distance is equal to or larger than a predetermined set distance that is longer than the reference distance.

9. The tire replacement management system according to any one of claims 1 to 4, further comprising:
an operating rate acquisition unit configured to acquire an operating rate of the vehicle; and
a timing change processing unit configured to change the recommended timing when the operating rate of the vehicle in the recommended timing is equal to or larger than a predetermined threshold.

10. The tire replacement management system according to claim 9, wherein
the timing change processing unit specifies a first candidate timing that is before the recommended timing, when the operating rate is equal to or larger than the threshold, and changes the recommended timing to the first candidate timing, when a first operating rate of the vehicle in the first candidate timing is less than the threshold.

11. The tire replacement management system according to claim 10, wherein
the timing change processing unit specifies a second candidate timing that is after the recommended timing, when the first operating rate is equal to or larger than the threshold, and changes the recommended timing to the second candidate timing, when a second operating rate of the vehicle in the second candidate timing is less than the threshold.

12. A tire replacement management method comprising:
an estimation step of estimating a busy timing of tire replacement work performed by a service provider that provides a tire replacement service for a vehicle, on the basis of meteorological prediction information;
a recommended timing determination step of determining a recommended timing in which a first tire mounted to the vehicle to be subjected to the tire replacement service is replaced with a second tire different from the first tire, to be a timing separated, by a set period specified in advance, from the busy timing; and
an output step of outputting the recommended timing to a terminal device used by a manager of the vehicle.

13. A program for causing one or a plurality of processors to execute:
an estimation step of estimating a busy timing of tire replacement work performed by a service provider that provides a tire replacement service for a vehicle, on the basis of meteorological prediction information;
a recommended timing determination step of determining a recommended timing in which a first tire mounted to the vehicle to be subjected to the tire replacement service is replaced with a second tire different from the first tire, to be a timing separated, by a set period specified in advance, from the busy timing; and
an output step of outputting the recommended timing to a terminal device used by a manager of the vehicle.
